Europäisches Patentamt

European Patent Office

Office européen des brevets

(11) Publication number: **0 477 913 A2**

# EUROPEAN PATENT APPLICATION

(21) Application number: **91116357.4**

(22) Date of filing: **25.09.91**

(51) Int. Cl.5: **C03B 23/025**, C03B 27/044, C03B 35/24, C03B 35/16

(30) Priority: **26.09.90 JP 256229/90**

(43) Date of publication of application:
**01.04.92 Bulletin 92/14**

(84) Designated Contracting States:
**BE DE FR GB IT**

(71) Applicant: **ASAHI GLASS COMPANY LTD.**
**1-2, Marunouchi 2-chome**
**Chiyoda-ku Tokyo 100(JP)**

(72) Inventor: **Hirotsu, Takashi**
**6-11-13-135, Shimosueyoshi, Tsurumi-ku**
**Yokohama-shi, Kanagawa-ken(JP)**
Inventor: **Ohtani, Kazuyoshi**
**4906, Tana**
**Sagamihara-shi, Kanagawa-ken(JP)**
Inventor: **Nagaoka, Teruji**
**2103, Nakatsu, Aikawa-machi**
**Aiko-gun, Kanagawa-ken(JP)**

(74) Representative: **Wächtershäuser, Günter, Dr.**
**Tal 29**
**W-8000 München 2(DE)**

(54) Process and apparatus for bend-shaping glass plates.

(57) A process for bend-shaping a glass plate by heating the glass plate to the nearly softening temperature, while the glass plate is transferred along a transferring surface in a shaping furnace, wherein the glass plate is transferred along a complexly bending transferring surface having a complexly curved face which is upwardly projected with predetermined radius of curvatures along both the axis of the transferring direction and the axis perpendicular to the transferring direction, the transferring surface having an upward gradient portion at at least an area near the exit of the shaping furnace, to thereby bend the glass plate into a shape which substantially corresponds to that of the complexly bending transferring surface, and then, the glass plate is cooled and strengthened along a cooling transferring surface which has a complexly curved face so as to be substantially continuous to that of the complexly bending transferring surface and which has at least a downward gradient portion in at least a part of it.

EP 0 477 913 A2

The present invention relates to a process for bend-shaping a glass plate so that the glass plate has a complexly curved face and an apparatus for carrying out the process.

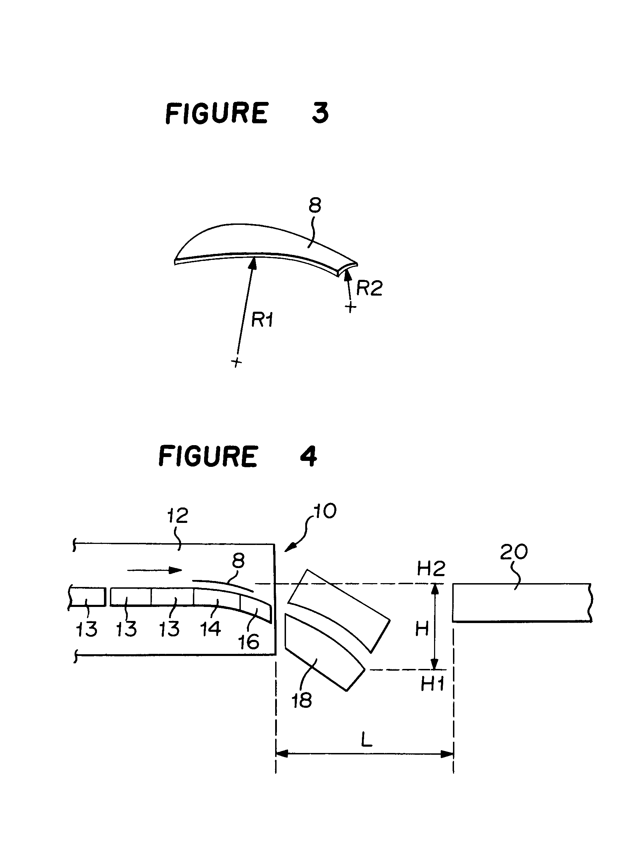

In automobile industries, there has been an increasing demand of a glass plate having a complexly curved face, i.e. a glass plate 8 having a complexly curved face wherein a flat glass plate is bend-shaped with two different radius of curvatures R1 and R2 in its longitudinal and transversal directions as shown in Figure 3.

Figure 4 shows an example of a bend-shaping apparatus proposed as an apparatus for bend-shaping a glass plate to have a complexly curved face (Japanese Examined Patent Publication No. 10331/1974). With use of a bend-shaping apparatus 10, a glass plate 8 is bend-shaped to have a radius R2 along the axis perpendicular to the transferring direction while it is transferred on hearth beds and then, the glass plate 8 is bend-shaped to have a radius R1 along the axis of the transferring direction on hearth beds 14, 16 each of which has a portion curved along the axis of the transferring direction, and then it is cooled and strengthened at a blowing port 18, whereby a complexly curved face is formed in the glass plate 8 as shown in Figure 3.

A shaping furnace shares a very large portion for investment of such glass manufacture line. Accordingly, it is advantageous if equipments for a conventional glass plate manufacture line to produce a glass plate having a simply curved face can be used for a glass plate manufacture line which is used for producing a glass plate having a complexly curved face. In particular, it is advantageous if the shaping furnace for the conventional manufacture line can be used in common. However, there were many difficulties in using in common the shaping furnace. Namely, when it is desired that the glass plate manufacture line for a glass plate having a simply curved face, which is already equipped, is used for a glass plate manufacture line for a glass plate having a complexly curved face as shown in Figure 4, it is necessary to replace the hearth beds 14, 16 and the blowing port 18 in the glass plate manufacture line for a glass plate having a simply curved face by those for a glass plate having a complexly curved face. In the conventional bend-shaping apparatus for producing a glass plate having a complexly curved face, however, there was a large distance in the vertical direction between the level H2 of the position where the glass plate is not yet bend-shaped and the level H1 of the position where the glass plate has been bend-shaped. The distance is indicated by H in Figure 4. Namely, if the shaping furnace of the glass plate manufacture line for a glass plate having a simply curved face is to be used in common for the glass plate manufacture line for a glass plate having a complexly curved face, it is necessary to provide a special raising means for raising a glass plate, which has been bend-shaped in the longitudinal direction, from the lower level H1 to the higher level H2 in a case that the glass plate having a complexly curved face is to be manufactured.

The lower level H1 varies depending not only on the difference between the nature of glass plate having a simply curved face and the nature of the glass plate having a complexly curved face but also on the specification of the glass plate having the complexly curved face. Namely, such raising means has to be either of an inclusive use which is separately prepared depending on the specification for bend-shaping the glass plate, or has to be used after the adjustment of an existing raising means depending on the specification. The preparation of several types of raising means for inclusive use depending on the type of glass plate is not preferable because a large investment for equipment is required. The adjustment of the existing raising means is not practical because much time and labor are required when the type of glass plate to be manufactured is changed. In addition, in practice, there are many difficulties in the technical viewpoint to raise the glass plate from the lower level H1 to the higher level H2.

Namely, in the conventional glass plate bend-shaping line for bend-shaping a glass plate having a simply curved face, the distance L between a shaping furnace 12 and a post-treating conveyor 20 is determined to be short (generally, several meters or shorter) in order to reduce a space of equipment as possible. Accordingly, when the shaping furnace in the existing glass plate shaping line for a glass plate having a simply curved face is used for the production of a glass plate having a complexly curved face, it is necessary to raise the glass plate from the lower level H1 to the higher level H2 in the relatively short distance L.

In such conditions, it is very difficult to transfer stably the glass plate in that distance because the radius of curvature and the gradient of the transferring surface of the blowing port 18 are different from those of the transferring surface of the raising means. Such difficulty can be eliminated if the distance L can be enlarged to more than 10 meters. However, this does not meet the demand of saving space, and it is impossible to use the existing manufacture line for a glass plate having a simply curved face for the manufacture line for a glass plate having a complexly curved face.

It is an object of the present invention to eliminate the disadvantage described above and to provide a process for bend-shaping a glass having a complexly curved face and an apparatus for carrying out the process, which enables to utilize the most part of equipment of the existing manufacture line for a glass plate having a simply curved face and which is sufficient for only simple change of equipment.

It is another object of the present invention to provide a process for bend-shaping a glass plate having a complexly curved face and an apparatus for carrying out the process which can operate in a small space of equipment.

Another object of the present invention is to permit use in common of the shaping furnace for a glass plate having a simply curved face and the shaping furnace for a glass plate having a complexly curved face in spite of various kinds of specification.

Another object of the present invention is to standardize an amount of falling of a glass plate from a higher position H2 (the position of the glass plate before falling) to a lower position H1 (the position after the falling) during the operation of shaping the glass plate to have a complexly curved face, so that a raising means to raise the glass plate can be used commonly irrespective of the specification of bending the glass plate having a complexly curved face, and labor to adjust the equipments of bend-shaping the glass plate at the time of changing the specification of the glass plate can be reduced as possible.

It is another object of the present invention to improve stability in raising the bent glass plate by reducing the length of transferring the glass plate.

In accordance with the present invention, there is provided a process for bend-shaping a glass plate by heating the glass plate to the nearly softening temperature, while the glass plate is transferred along a transferring surface in a shaping furnace, to thereby bend the glass plate, by its own deadweight, into a shape corresponding to the shape of the transferring surface, characterized by comprising:

a step of complexly bending the glass plate by transferring the glass plate along a complexly bending transferring surface having a complexly curved face which is upwardly projected with predetermined radius of curvatures along both the axis of the transferring direction and the axis perpendicular to the transferring direction, said transferring surface having an upward gradient portion at at least an area near the exit of the shaping furnace, whereby the glass plate is bent into a shape which substantially corresponds to that of the complexly bending transferring surface, and

a cooling and strengthening step of cooling and strengthening the glass plate by transferring it, which has been delivered through the exit of the shaping furnace, along a cooling transferring surface which has a complexly curved face so as to be substantially continuous to that of the complexly bending transferring surface and which has at least a downward gradient portion in at least a part of it.

Further, the process for bend-shaping a glass plate of the present invention may have a moving step of moving the glass plate to the level of a post-treating transferring path after the cooling and transferring step.

Further, the process for bend-shaping a glass plate according to the present invention may have a simply bending step of bending the glass plate by its own deadweight into a shape substantially corresponding to the shape of a simply bending and transferring surface having a simply curved face which is upwardly projected with predetermined radius of curvatures along the axis perpendicular to the transferring direction while the glass plate is transferred in the substantially horizontal direction in the shaping furnace, before the complexly bending step.

Further, in accordance with the present invention, the complexly bending transferring surface is provided by hearth beds in the shaping furnace, and the glass plate is held in a floating state by a gas layer formed of gas which is blown from the lower part of the complexly bending transferring surface when the glass plate is transferred along the complexly bending transferring surface.

Further, in accordance with the present invention, there is provided an apparatus for bend-shaping a glass plate which comprises a shaping furnace for heating the glass plate to the nearly softening temperature of the glass plate, a complexly bending transferring surface positioned in the shaping furnace, which has a complexly curved face so as to upwardly project along both the axis of the transferring direction and the axis perpendicular to the transferring direction and which has an upward gradient portion at at least an area near the exit of the shaping furnace, a cooling transferring surface which has a complexly curved face so as to be substantially continuous to that of the complexly bending transferring surface and which has a downward gradient portion in at least a part of it, and a glass plate cooling and strengthening means disposed near the cooling transferring surface, whereby the glass plate is heated to the nearly softening temperature while the glass plate is transferred along the transferring surface in the shaping furnace to thereby bend by its deadweight the glass plate into a shape corresponding substantially to that of the transferring surface.

Further, the apparatus for bend-shaping a glass plate of the present invention may have a moving means to move the glass plate to the level of a post-treating transferring path, which is positioned at the downstream side in the transferring direction of the cooling transferring surface.

Further, the apparatus for bend-shaping a glass plate of the present invention may have a simply bending transferring surface which is positioned at the upstream side in the transferring direction of the complexly bending transferring surface and which has an upwardly projecting simply curved face along the axis perpendicular to the transferring direction.

Further, in accordance with the apparatus for bend-shaping a glass plate of the present invention, the complexly bending transferring surface is provided by hearth beds in the shaping furnace, and the complexly bending transferring surface is provided with a holding means which ejects gas from the lower part of the complexly bending transferring surface to hold the glass plate in a floating state by a gas layer formed of gas.

In accordance with the technique described above, the glass plate transferred along the transferring surface located in the shaping furnace is heated to the nearly glass softening temperature in the shaping furnace so that it is shaped by its deadweight to have a complexly curved face which corresponds to the shape of the transferring surface; the glass plate is cooled and strengthened by means of the cooling and strengthening means; and then, it is introduced in the post-treating transferring path which transfers the glass plate to a place where a post-treatment such as washing is carried out.

In such technique, any type of shaping furnace for bend-shaping a glass plate may be used as far as the shaping furnace includes a heating means for heating the glass plate as an object to be shaped to the temperature of softening and a transferring surface for transferring thereon the glass plate. In this case, the heating means may be of a type using a radiation heat by a heater. Further, the heating means may be of such a type that a hot gas is ejected from the lower part of the hearth beds which are normally constituted by refractory bricks, through apertures formed in the hearth beds so that the glass plate is heated to nearly the glass softening temperature. In the later case, the glass plate is held in a floating state by a layer formed of the gas. This means that the hearth beds of the shaping furnace constitute the above-mentioned transferring surface. The discharging of the hot gas from the lower part of the hearth beds eliminates the contact of the glass plate to the transferring surface, and accordingly, the glass plate is prevented from occurring a flaw during the transfer. This is a preferable embodiment from the viewpoint of preventing a flaw on the glass plate.

The design of the glass plate cooling and strengthening means may be changed as desired as far as the glass plate can be strengthened in the shaping furnace while the shape of the shaped glass plate can be kept. It is in particular preferable to use the glass plate cooling and strengthening means having such a construction that a cooling air blowing port module group wherein a number of nozzle-like blowing ports are arranged with appropriate intervals above and below the transferring path for transferring the glass plate, are provided whereby the glass plate is cooled and strengthened from the upper and lower parts by air ejected from the blowing ports. Such construction is desirable from the viewpoint of uniformly strengthening the glass plate. Further, it is possible to carry out cooling operation in two stages: the primary cooling wherein the glass plate is cooled to a temperature lower than the distortion point while it is uniformly strengthened, and the secondary cooling wherein the glass plate is cooled to the substantially room temperature. The investment for the cooling blowing port module can be saved if the module group is used for only the primary cooling.

As means for transferring the glass plate in the present invention, there are the complexly bending transferring surface positioned in the shaping furnace, which has a complexly curved face so as to upwardly project along both the axis of the transferring direction and the axis perpendicular to the transferring direction and which has an upward gradient portion at at least an area near the exit of the shaping furnace, and the cooling transferring surface which has a complexly curved face so as to be substantially continuous to that of the complexly bending transferring surface and which has a downward gradient portion in at least a part of it. Alternatively, there may be a complexly bending transferring surface positioned in the shaping furnace, which has a complexly curved face so as to downwardly project along both the axis of the transferring direction and the axis perpendicular to the transferring direction and which has a downward gradient portion at at least an area near the exit of the shaping furnace, and a cooing transferring surface which has a complexly curved face so as to be substantially continuous to that of the complexly bending transferring surface and which has an upward gradient portion in at least a part of it. The difference of the transferring surfaces between the former case and the later case is only the direction of the projection of the curved surfaces, and they can be considered to be substantially same. Accordingly, description will be made as to the former case, namely, the case of forming a glass plate having a complexly curved face which projects upwardly.

The inclination angle of the upward gradient can be determined depending on the shape of a glass plate to be shaped. The radius of curvature of the transferring surface is also determined so as to correspond to a shape with which the glass plate is shaped. In the present invention, it is preferable that the radius of curvature along the axis perpendicular to the transferring direction is 500 mm or longer, more preferably, 1,000 mm or longer, and the radius of curvature along the axis of transferring direction is 10,000 mm or longer, more preferably, 20,000 mm or longer.

The radius of curvature of the transferring surface can be optionally determined depending on a position on the transferring surface. For instance, radius of curvature can be large at the initial stage of transferring and is gradually decreased toward the downstream side of the transferring path, whereby the glass plate has a shape substantially corresponding to a predetermined shape of bend in the area near the exit of the shaping furnace.

In the present invention, glass plates having various shapes of complexly curved face can be produced depending on needs. In this case, it is preferable to add a moving means at the downstream side in the transferring direction of the cooling transferring surface to thereby move the glass plate to the level or the height of the post-treating transferring path, from the standpoint that an existing manufacture line for glass plates having a simply curved face can be easily applied to manufacture glass plates having a complexly curved face. With the moving means, it is possible to transfer the glass plates to the post-treating transferring path by simply adjusting an angle of inclination of the moving means wherein the post-treating step is unchanged, whereby various kinds of glass plate having different kinds of radius of curvature can be easily produced. Any type of the moving means, i.e. a disk conveyor, a belt conveyor or the like can be utilized as far as it can move the glass plate.

In a case that it is necessary to bend-shape a glass plate deeper along only one direction as a windshield glass for automobile (one direction means the horizontal direction when the windshield glass is attached to an automobile), it is preferable to provide a simply bending transferring surface at the upstream side of the complexly bending transferring surface, wherein the simply bending transferring surface has a predetermined radius of curvature which curves along only the axis perpendicular to the transferring direction. In this case, a bending operation may be applied to a glass plate along the axis perpendicular to the transferring direction, before forming a complexly bending face, by transferring the glass plate on the simply bending transferring surface in the shaping furnace so that the direction of bending the glass plate to have a smaller radius of curvature coincides with the direction perpendicular to the transferring direction.

Further, in the above-mentioned case, if there is a difference in inclination near the boundary between the complexly bending transferring surface and the simply bending transferring surface, a glass plate may contact with the complexly bending transferring surface when the glass plate passes the boundary region, so that a strain or a defect may take place in the glass plate. In order to eliminate such undesired effect, it is advantageous to incline the simply bending transferring surface so as to have a slightly upward gradient in the transferring direction. When there is a difference in inclination between the simply bending transferring surface and the complexly bending transferring surface, the glass plate may be reversely bent at the boundary region. However, this causes no problem because the glass plate is shaped in the final shape above the complexly bending transferring surface after it has been passed through the boundary region.

In drawings:

Figure 1 is a schematic view showing in its entirety an embodiment of the glass plate bending apparatus according to the present invention;

Figure 2 is an enlarged view of an important portion of the glass plate bending apparatus of the present invention;

Figure 3 is a perspective view of a glass plate bend-shaped to have a complexly curved face;

Figure 4 is a diagram partly omitted of a conventional glass plate bend-shaping apparatus;

Figure 5 is a perspective view showing an embodiment of the glass plate moving means used for the present invention; and

Figure 6 is a perspective view of an important portion of a device in the cooling step according to the method of the present invention.

Preferred embodiments of the process for bend-shaping a glass plate of the present invention and apparatus for carrying out the process will be described in detail with reference to the drawings.

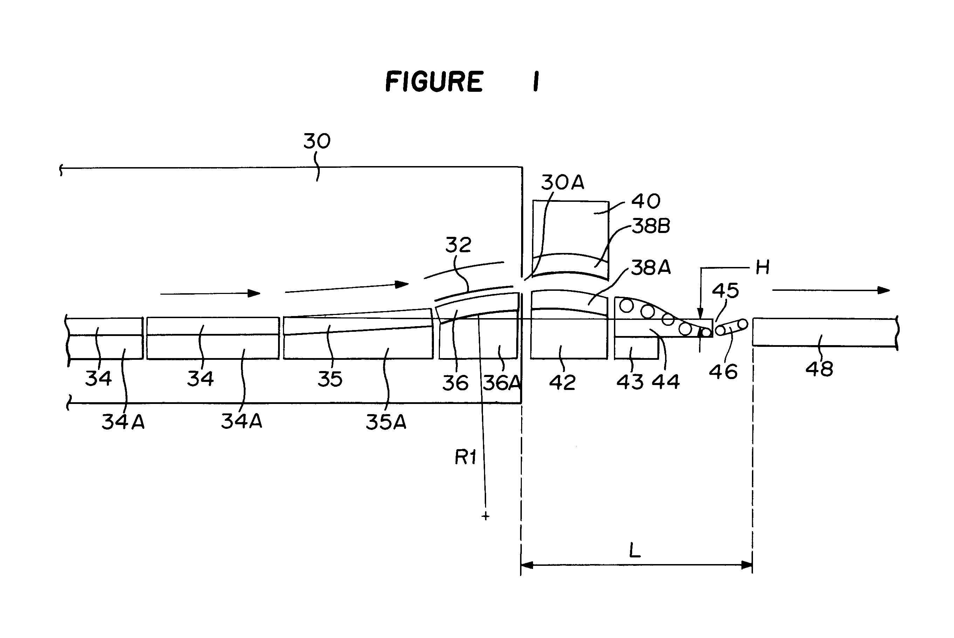

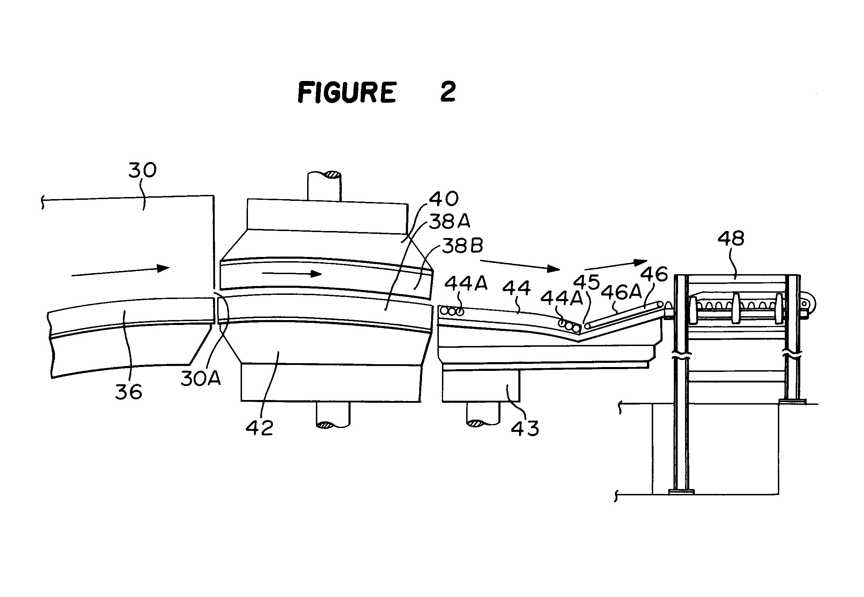

Figure 1 is a side view of an embodiment of the glass plate bend-shaping apparatus according to the present invention, and Figure 2 is an enlarged view of an important portion of the bend-shaping apparatus. In a gas furnace 30 as a shaping furnace, there are provided hearth beds 34, 34,... and a hearth bed 35 which constitute a transferring surface for a glass plate 32 and which form a simply bending transferring surface. The surfaces of the hearth beds 34, 34,... and the hearth bed 35 respectively have an upwardly projecting curved face with a radius of curvature R2 which are formed along the directional axis perpendicular to the moving direction of the glass plate 32. The hearth beds 34 are arranged in substantially horizontal direction with respect to the transferring direction, and the hearth bed 35 is arranged to have a slightly upward gradient with respect to the transferring direction. The surfaces of the hearth beds 34, 34,... and the hearth bed 35 are respectively inclined 3°-4° around the axis of the transferring direction.

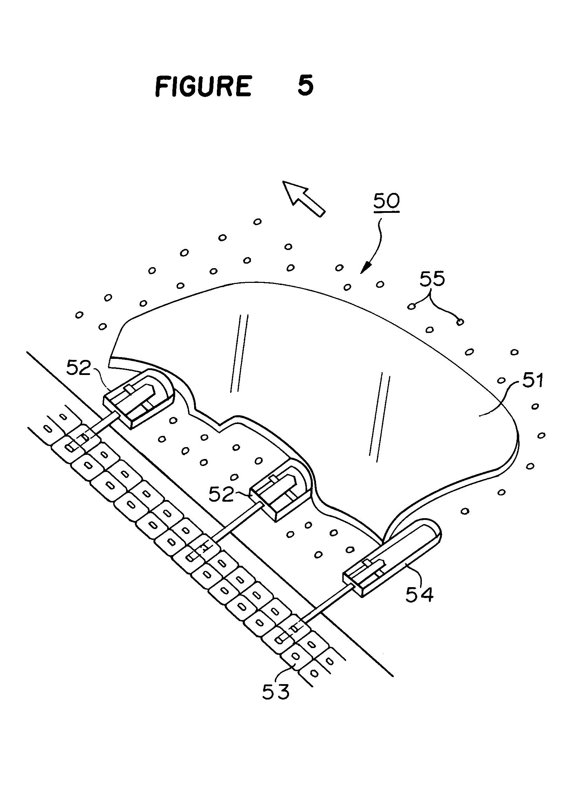

The glass plate 30 is held in a floating state above the hearth beds, 34, 34,... and the hearth bed 35 by means of a gas layer formed of gas blown from the lower part of the hearth beds. In Figure 1, reference numerals 34A, 34A,... and 35A respectively designate gas chambers provided at the lower part of the hearth beds, which blast gas to hold the glass plate in a floating state above the surface of the hearth beds. In the state that the glass plate 32 is held in a floating state above the hearth beds 34, 35, the glass plate is contacted and engaged through holders for driving disks in an operable manner with a driving chain 53 which is disposed along a side in the moving direction of the hearth beds of the gas furnace 30, as shown in Figure 5. On the movement of the holders, the glass plate 32 is continuously transferred above the hearth beds 34, 34,... and the hearth bed 35. During the transfer of the glass plate, the glass plate is heated to a predetermined temperature near the softening point, and it is bend-shaped by its deadweight into a shape substantially corresponding to the curved shape of the surface of the hearth beds 34, 35.

Between the hearth bed 35 and the exit 30A of the gas furnace 30, there is arranged a hearth bed 36 which has a curved face with a radius of curvature R2 formed along the directional axis perpendicular to the moving direction and a curved face with a radius of curvature R1 formed along the axis of the moving direction and which has an upward gradient.

Outside the gas furnace 30, there are provided a cooling transferring surface which is substantially continuous with the hearth bed 36 and has the substantially same curved shape (i.e. the radii of curvature R1, R2) and a cooling port module group 38A which blasts cooling air to the glass plate to thereby serve as a cooling surface, whereby the module group 38 forms a downward gradient face. Above the cooling port module group 38A, a cooling port module group 38B having the construction similar to the module group 38A is placed opposing the module group 38A, whereby the glass plate 32 to be passed between the cooling port module groups 38A, 38B is rapidly cooled and strengthened. Cooling port boxes 40, 42 are respectively air chambers connected to the cooling port module groups 38A, 38B.

Any type of the transferring means can be used as far as it can transfer the glass plate in the shaping furnace. In particular, Figure 5 shows an embodiment of the transferring means capable of heating the glass plate by feeding hot gas from the lower part of the hearth beds. The glass plate 51 is held in a floating state through a gas layer formed of gas blown through apertures 55 formed in the hearth bed 50, and is transferring in the direction indicated by an arrow mark. The hearth bed is inclined in a range from 1° to 5°, preferably 2° to 4° around the transferring direction with respect to the horizontal direction. Further, a driving chain 53 which is driven in the direction of transferring the glass plate is disposed in the vicinity of the lower side of the inclined hearth bed 50. Further, the driving chain 53 is provided with holders 52, 52 and a pusher 54 which hold the glass plate. When the driving chain 53 is driven in the arrow mark direction, the holders 52, 52 and the pusher 53 hold the glass plate 51 to transfer it. The embodiment as shown in Figure 5 is one of possible transferring devices, and the present invention is not limited to this embodiment.

A disk conveyor 44 is located at the downstream end of the cooling air blowing port module group 38A. The disk conveyor 44 has a downward gradient extending from the right end of the cooling air blowing port module group 38A to a position indicated by reference numeral 45 as shown in Figure 1. In the disk conveyor 44, heat-resisting rubber is applied on the circumferential surface of the existing disk rollers 44A and a heat-resisting plastic ring of a material such as bakelite is attached onto the circumferential surface of the heat-resisting rubber.

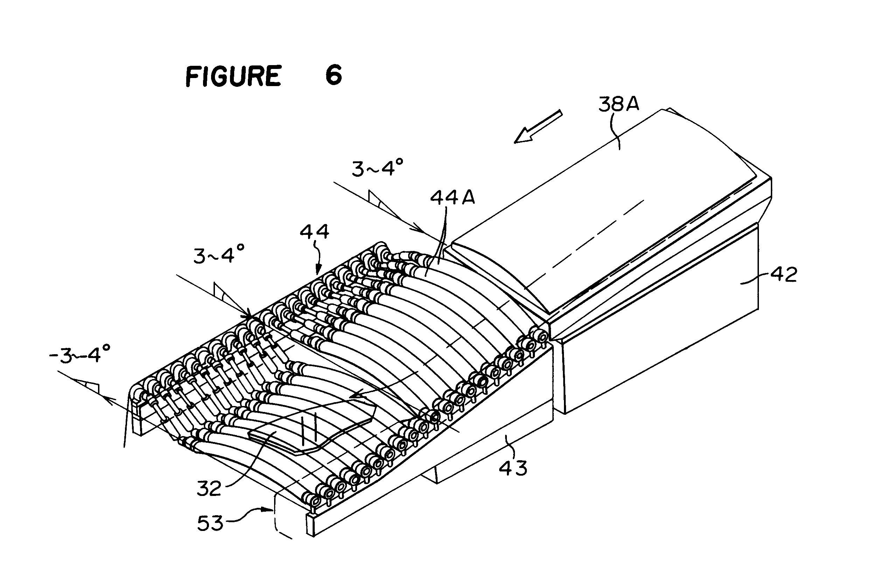

In this specified example, the cooling step comprises two steps. Figure 6 illustrates in a perspective view a device for carrying out the cooling step in the two steps. In the first step, the glass plate 32 is transferred on the cooling air blowing port module group 38A during which the glass plate 32 is rapidly cooled and is uniformly strengthened (primary cooling). In Figure 6, the cooling air blowing port module group 38B placed above the module group 38A is omitted. In the secondary step, the glass plate 32 is transferred on the disk conveyor 44 while it is further cooled by air through a blowing port 43 provided at the lower part of the disk conveyor 44. The glass plate 32 is cooled separated from a holder (Figure 5) to be carried to the next step (secondary cooling).

The separation of the glass plate from the holder is not particularly limited. However, two ways of separation are exemplified as preferred processes. In the first process, the driving chain 53 and the holder attached thereto are directed upwardly from the level of the transferring surface in the vicinity of a position where the glass plate 32 is cooled to the room temperature, and at the same time the revolution speed of the disk roller 44A is increased about 1%-5%. In the second process, the inclination around the transferring direction of the transferring surface is gradually changed toward the transferring direction. Namely, the transferring surface inclined toward the driving chain 53 is changed so as to incline to the direction opposite the driving chain 53 as the glass plate is moved into the transferring direction, whereby the glass plate 32 is shifted by its deadweight on the transferring surface. In the case of this embodiment, since the shape of the transferring surface is determined by the shape which is formed by the circumferential surface of the disk rollers 44A, it is necessary to gradually change the shape of the circumferential surface of the disk rollers 44A toward the downstream side of the transferring direction in order to shift the glass plate 32 on the transferring surface according to the second process. Thus, it is preferable to use expand rollers as the disk rollers in order to gradually change the inclination of the disk rollers 44A. The expand rollers preferably have a spring of a heat-resisting metal such as stainless steel inside the surface layer made of the heat-resisting rubber. Accordingly, the radius of curvature and the inclination of the front surface of the disk roller can be desirably determined by determining the position of the both ends of the rollers. Figure 6 illustrates such device used in the cooling step wherein the expand rollers are used.

At the downstream end in the transferring direction of the disk conveyor 44, there is provided in a continuous manner a belt conveyor 46 having an upward gradient which moves the glass plate 32 to a belt conveyor 48 which is used for a post-treating step, and the upper end of the belt conveyor 46 is determined to have the substantially same level of the belt conveyor 48 for a post-treating step. A heat-resisting V-belt 46A is used for the belt conveyor 46.

In case that the levels of the downstream end of the disk conveyor 44 and the post-treating belt conveyor 48 are the substantially same, it is possible to directly transfer the glass plate 32 from the disk conveyor 44 to the post-treating belt conveyor. In such case, it is unnecessary to provide the belt conveyor 46; thus, it is extremely desirable from the viewpoint of simplifying equipment.

However, it is not always in agreement of the transferring distance needed for the bend-shaping the glass plate with the transferring distance needed for the quenching the glass plate. The transferring distances are changed depending on a requisite complexly curved face of glass plate. Accordingly, it is preferable in practical use to satisfy various specifications of the shape of glass plate by adjusting the inclination angle of the belt conveyor 46 for transferring the glass plate.

Namely, in accordance with the present invention, it is possible to arrange to a fair extent the level of the downstream end in the transferring direction of the disk conveyor 44 by adjusting the gradient of the hearth beds 34, 35, 36 and the gradient of the cooling air blowing port module group 38A, in spite of the specifications of the glass plate Accordingly, it is possible to satisfy a change of the specification by slightly adjusting the gradient of the belt conveyor 46. Further, the gradient of the above-mentioned hearth beds or the other elements may be adjusted so that the difference between the level of the downstream end in the transferring direction of the disk conveyor 44 and the level of the post-treating conveyor 48 is slight. Accordingly, it is not always to determine the gradient of the belt conveyor 46 to be steep and accordingly, extremely stable transferring operation is obtainable.

The function of the apparatus for carrying out the process of the present invention will be described.

The glass plate 32 is transferred on the hearth beds 34, 34,... and the hearth bed 35 in the gas furnace 30, during which it is bend-shaped with a predetermined radius of curvature R2 along the axis perpendicular to the transferring direction and is heated to a high temperature necessary for quenching. When the glass plate 32 passes through the hearth bed 35 and reaches the upper surface of the hearth bed 36 which is provided near the exit 30A of the gas furnace 30 and which has a predetermined radius of curvature R1 along the axis of the transferring direction, the glass plate is bend-shaped with the radius of curvature R1 in the longitudinal direction along the curved shape off the hearth bed 36, whereby the glass plate 32 is bend-shaped to have a complexly curved face having the radius of curvature R2 in the width direction and the radius of curvature R1 in the longitudinal direction.

The glass plate 32 formed to have a complexly curved face is taken out through the exit 30A of the gas furnace 30 and is transferred onto the cooling air blowing port module group 38A where it is cooled to about 400°C and is strengthened by the cooling air from the blowing ports 40, 42 through the cooling air blowing port module groups 30A, 30B. The cooled glass plate 32 is descended along the disk conveyor 44 and is further cooled by the cooling air through the blowing port 43 without using a cooling air blowing port module group. After the glass plate 32 has had a predetermined shape and strength, it is separated from the holder attached to the driving chain 53 and is further delivered to the post-treating belt conveyor 48 through the belt conveyor 46 which has an upward gradient surface.

In a case that the glass plate 32 is bend-shaped to have a simply curved face wherein the glass plate has a curved face along only the width direction as often seen in a conventional method of bend-shaping glass plates, the hearth bed 35 having an upward gradient and the hearth bed 36 having a curved surface which are disposed near the exit 32A of the gas furnace 30 and the cooling air blowing port module group 38A, the disk roller 44 and the belt conveyor 46 which are located outside the gas furnace 30 may be replaced by a hearth bed for a simply bend-shaping and a disk roller so that they are in continuous with the hearth beds 34, 34,... and the post-treating conveyor 48. Thus, some of the existing equipments can be utilized. With this arrangement, the glass plate 32 is bend-shaped along the width direction of it so as to correspond to the shape of the surfaces of the hearth beds 34, 34,... while the glass plate 32 is transferred therethrough in the same manner as described above.

Thus, in accordance with the present invention, since the glass plate 32 is bend-shaped along the longitudinal direction and it is once ascended, an amount of falling H of the glass plate 32 can be made small. Accordingly, although the distance L between the gas furnace 30 and the post-treating conveyor 48 is short in the existing production line for bend-shaping the glass plate 32 in the direction only its width, the glass plate 32 can be raised from the level H2 of the falling position to the level H1 of the post-treating conveyor 48. Thus, a manufacture line for bending glass plates wherein the shaping furnace and the other major portion of equipments in the existing manufacture line for bending glass plates can be commonly used and glass plates having a complexly curved face can be formed by simply replacing a part of the existing manufacture line, can be obtained.

In accordance with the process for bend-shaping a glass plate and the apparatus for carrying out the process of the present invention, a glass plate which has been bend-shaped along the direction perpendicular to the transferring direction in the gas furnace is once raised in the gas furnace, followed by bend-shaping it along the transferring direction, and the glass plate is taken out from the gas furnace, and is descended while cooled and strengthened, whereby the difference in height between the position at which the glass plate cooled and strengthened-and the position of the post-treating belt conveyor can be small, and the handling of the bend-shaped glass plate can be easy. Accordingly, the glass plate can be bend-shaped to have a complexly curved face by bending it in the transferring direction and the direction perpendicular to the transferring direction with use of existing equipments of manufacture such as a shaping furnace, even when the distance between the existing gas furnace and the post-treating conveyor is short.

In accordance with the inventions claimed in Claims 3 and 8, the existing equipments of the manufacture line for glass plates can be further flexibly used to obtain glass plates having a complexly curved face.

In accordance with the inventions claimed in Claims 4 and 9, a process of bend-shaping glass plates and an apparatus which reduce the space can be presented in a case that a glass plate is required to be deeply bend-shaped in only one direction of the glass plate as required in the ordinary glass plate for automobile.

In accordance with the inventions claimed in Claims 5 and 10, a process for obtaining a curved glass plate of high quality wherein a danger of occurring a strain in the glass plate during transfer is minimized because the glass plate does not contact with the transferring surface, and an apparatus for carrying out the process can be provided.

**Claims**

1. A process for bend-shaping a glass plate by heating the glass plate to the nearly softening temperature, while the glass plate is transferred along a transferring surface in a shaping furnace, to thereby bend the glass plate, by its own deadweight, into a shape corresponding to the shape of the transferring surface, characterized by comprising:

   a step of complexly bending the glass plate by transferring the glass plate along a complexly bending transferring surface having a complexly curved face which is upwardly projected with predetermined radius of curvatures along both the axis of the transferring direction and the axis perpendicular to the transferring direction, said transferring surface having an upward gradient portion at at least an area near the exit of the shaping furnace, whereby the glass plate is bent into a shape which substantially corresponds to that of the complexly bending transferring surface, and

   a cooling and strengthening step of cooling and strengthening the glass plate by transferring it, which has been delivered through the exit of the shaping furnace, along a cooling transferring surface which has a complexly curved face so as to be substantially continuous to that of the complexly bending transferring surface and which has a downward gradient portion in at least a part of it.

2. A process for bend-shaping a glass plate by heating the glass plate to the nearly softening temperature, while the glass plate is transferred along a transferring surface in a shaping furnace, to thereby bend the glass plate, by its own deadweight, into a shape corresponding to the shape of the transferring surface, characterized by comprising:

a step of complexly bending the glass plate by transferring the glass plate along a complexly bending transferring surface having a complexly curved face which is downwardly projected with predetermined radius of curvatures along both the axis of the transferring direction and the axis perpendicular to the transferring direction, said transferring surface having a downward gradient portion at at least an area near the exit of the shaping furnace, whereby the glass plate is bent into a shape which substantially corresponds to that of the complexly bending transferring surface, and

a cooling and strengthening step of cooling and strengthening the glass plate by transferring it, which has been delivered through the exit of the shaping furnace, along a cooling transferring surface which has a complexly curved face so as to be substantially continuous to that of the complexly bending transferring surface and which has an upward gradient portion in at least a part of it.

3. The process for bend-shaping a glass plate according to Claim 1, which further comprises a moving step of moving the glass plate to the level of a post-treating transferring path after the cooling and strengthening step.

4. The process for bend-shaping a glass plate according to Claim 1, which further comprises, before the complexly bending step, a simply bending step of transferring the glass plate in the substantially horizontal direction along a simply bending transferring surface having a simply curved face which is upwardly projected with predetermined radius of curvatures along the axis perpendicular to the transferring direction in the shaping furnace, whereby the glass plate is bent into a shape which substantially corresponds to that of the simply bending transferring surface.

5. The process for bend-shaping a glass plate according to Claim 1, wherein the complexly bending transferring surface is provided by hearth beds in the shaping furnace, and the glass plate is held in a floating state by a gas layer formed of gas which is blown from the lower part of the complexly bending transferring surface when the glass plate is transferred along the complexly bending transferring surface.

6. An apparatus for bend-shaping a glass plate wherein the glass plate is heated to the nearly softening temperature while the glass plate is transferred along a transferring surface in a shaping furnace to thereby bend by its deadweight the glass plate into a shape corresponding substantially to that of the transferring surface which comprises:

a shaping furnace for heating the glass plate to the nearly softening temperature of the glass plate,

a complexly bending transferring surface positioned in the shaping furnace, which has a complexly curved face so as to upwardly project along both the axis of the transferring direction and the axis perpendicular to the transferring direction and which has an upward gradient portion at at least an area near the exit of the shaping furnace,

a cooling transferring surface which has a complexly curved face so as to be substantially continuous to that of the complexly bending transferring surface and which has a downward gradient portion in at least a part of it, and

a glass plate cooling and strengthening means disposed near the cooling transferring surface.

7. An apparatus for bend-shaping a glass plate wherein the glass plate is heated to the nearly softening temperature while the glass plate is transferred along a transferring surface in a shaping furnace to thereby bend by its deadweight the glass plate into a shape corresponding substantially to that of the transferring surface which comprises:

a shaping furnace for heating the glass plate to the nearly softening temperature of the glass plate.

a complexly bending transferring surface positioned in the shaping furnace, which has a complexly curved face so as to downwardly project along both the axis of the transferring direction and the axis perpendicular to the transferring direction and which has a downward gradient portion at at least an area near the exit of the shaping furnace,

a cooling transferring surface which has a complexly curved face so as to be substantially continuous to that of the complexly bending transferring surface and which has an upward gradient portion in at least a part of it, and

a glass plate cooling and strengthening means disposed near the cooling transferring surface.

8. The apparatus for bend-shaping a glass plate according to Claim 6, which further comprises a moving means to move the glass plate to the level of a post-treating transferring path, which is positioned at the downstream side in the transferring direction of the cooling transferring surface.

9. The apparatus for bend-shaping a glass plate according to Claim 6, which further comprises a simply bending transferring surface which is positioned at the upstream side in the transferring direction of the complexly bending transferring surface and which has an upwardly projecting simply curved face along the axis perpendicular to the transferring direction.

10. The apparatus for bend-shaping a glass plate according to Claim 6, wherein the complexly bending transferring surface is provided by hearth beds in the shaping furnace, and the complexly bending transferring surface is provided with a holding means which ejects gas from the lower part of the complexly bending transferring surface to hold the glass plate in a floating state by a gas layer formed of gas.

# FIGURE I

EP 0 477 913 A2

# FIGURE 2

# FIGURE 3

# FIGURE 4

# FIGURE 5

# FIGURE 6

EP 0 477 913 A2